# EUROPÄISCHE PATENTANMELDUNG

(11) **EP 0 555 695 A1**
(43) Veröffentlichungstag der Anmeldung: **18.08.1993**
(21) Anmeldenummer: 93101257.9
(22) Anmeldetag: 28.01.1993
(51) Int. Cl.: B23B 51/04

(54) **Schneidwerkzeug zur Herstellung von zylindrischen Bohrungen**

(30) Priorität: 14.02.1992 DE 4204428
(71) Anmelder: Reccius, Helmut, Dipl.-Ing., 51647 Gummersbach (DE)
(72) Erfinder: Reccius, Helmut, Dipl.-Ing., 51647 Gummersbach (DE)

(57) **Zusammenfassung**

Schneidwerkzeug zur Herstellung von zylindrischen Bohrungen mit zwei oder mehreren Schneideinsätzen und mit radial oder annähernd radial gerichteten, einen unzerspanten Kern belassenden Schneiden, sowie in axialer Richtung des Werkzeuges verlaufenden Spanabführungen, wobei sich das Schneidwerkzeug (**1**) aus mindestens zwei koaxialen Teilen (**2; 3**) sammensetzt und das eine Teil (**2**) die Bohrkrone mit den Schneideinsätzen (**4, 4'**) und das andere Teil (**3**) als Träger für die Bohrkrone (**2**) mit einem Spannschaft (**3'**) bildet und wobei sich die Spanabführungen (**8, 10, 11; 16, 16'**) axial über beide Teile (**2; 3**) erstrecken und radial nach außen führen.

## Beschreibung

Die Erfindung betrifft Schneidwerkzeuge zur Herstellung von zylindrischen Bohrungen nach dem Oberbegriff des Anspruchs 1 .

Bekannt sind Bohrwerkzeuge zum Einbringen von Bohrlöchern größerer Bohrtiefe, bei denen das Bohrtiefenverhältnis - Bohrtiefe zu Bohrlochdurchmesser etwa L:D > 5 beträgt.

Beim sogenannten Tieflochbohren werden Bohrwerkzeuge eingesetzt, die zur Abführung der Bohrspäne innerhalb einer Bohrstange einen zentralen, entgegen der Richtung des Bohrvorschubes offenen Spanabführungskanal aufweisen.

Das Abführen der Bohrspäne und gegebenenfalls eines unzerspant bleibenden Bohrkernes erfolgt zur Vermeidung der Behinderung des Bohrvorganges und der Beschädigung oder Zerstörung der Bohrschneiden, sowie der Beschädigung der Bohrungswandung, durch Zuführung einer Spülflüssigkeit zwischen Bohrlochwandung und Bohrschneiden des Werkzeuges.

Auf ein solches Bohrwerkzeug bezieht sich beispielsweise der Gegenstand der **DE-OS 23 16 762**. Dabei erfolgt der Spanaustritt und gegebenenfalls der Austritt eines unzerspant gebliebenen Bohrkernes über einen zentralen Abführkanal am Bohrerende bzw. am Ende der das Bohrwerkzeug tragenden Bohrstange.
Die mit Bohrwerkzeugen der genannten Art angewandten Bohrtechniken erfordern speziell ausgebildete Werkzeugmaschinen mit entsprechend angepassten Werkzeugträgern.

Die vorliegende Erfindung geht von bekannten Bohrtechniken aus, deren vorteilhafte Arbeitsweise darin besteht, daß beim Bohren nur ein Teil des Gesamtvolumens des Materials zerspant werden muß, während der unzerspant bleibende, zentrale Materialanteil in Form eins Bohrkernes durch den zentralen Kanal der Bohrstange nach außen abgeführt wird.
Dadurch reduziert sich die zum Bohren erforderliche Bohrleistung und außerdem erhöht sich die Standzeit der Schneiden des Bohrwerkzeuges beträchtlich.

Gegenüber dem Bekannten ist es Aufgabe der Erfindung, unter Einsatz der bekannten Hohlbohrtechnik, die Abführung der Bohrspäne und des Bohrkernes ohne die Einspülung von Flüssigkeit und ohne den Einsatz von Werkzeugmaschinen spezieller Ausbildung und nicht am Ende der Bohrstange des Bohrwerkzeuges zu bewerkstelligen.

Die gestellte Aufgabe wird gelöst durch die Ausbildung eines Bohrwerkzeuges nach den Merkmalen des Anspruchs 1 und in weiterer vorteilhafter Ausgestaltung nach den Merkmalen der dem Anspruch 1 folgenden Ansprüche.

Infolge des spiralförmigen Verlaufs der Spanabführkanäle kann das beim Bohrvorgang zerspante Material einschließlich des unzerspant gebliebenen Bohrkernes ohne Behinderung durch die bei der Rotation des Bohrwerkzeuges auftretenden Fliehkräfte ohne Einsatz einer Spülflüssigkeit nach rückwärts und außen abtransportiert werden.
Unterstützt wird der Spanabführvorgang bzw. die Bohrkernabführung durch die gegenüber der Längsmittelebene des Werkzeuges gegeneinander geneigten Schneideinsätze.
Durch den unbehinderten Abtransport des zerspanten Materials und des Bohrkernes über die seitlichen Ausgangsöffnungen der Abführkanäle, sind einwandfreie Bohrlochwandungen erzielbar.
Die Zweiteilung des Bohrwerkzeuges in eine Schneidkrone und einen Schneidkronenträger trägt dazu bei, Kanäle relativ großer Weite mit spiralförmigem und radial nach außen gerichteten Verlauf in die Werkzeugteile einbringen zu können.
Außerdem erhält das Werkzeug einen massiven, steifen und mit den üblichen Spannmitteln, wie z.B. Dreibackenfuttern, Spannzangen oder dergleichen, mit großen radialen Kräften einspannbaren Schaft.

Durch den Abtransport des zerspanten Materials und des beim Bohrvorgang mit derartigen Werkzeugen entstehenden Bohrkernes durch die Entspanungsöffnungen in radialer Richtung, können alle werkstattüblichen Zerspanungsmaschinen mit eigenem Antrieb für den Einsatz des erfindungsgemäßen Werkzeuges verwendet werden.

In der Zeichnung ist ein Ausführungsbeispiel eines erfindungsgemäß ausgebildeten Werkzeuges dargestellt und anhand der nachfolgenden Beispielsbeschreibung näher erläutert.

Es zeigt:
- Fig. 1: den Schneidkronenteil des Schneidwerkzeuges in Verbindung mit den Schneideinsätzen in einer Seitenansicht, schematisiert dargestellt,
- Fig. 2: den das Schneidkronenteil aufnehmenden Träger in Seitenansicht, wobei der Träger in einer gegenüber dem Schneidkronenteil um einen Winkelbetrag um die Rotationsachse gedrehten Stellung dargestellt ist,
- Fig. 3: den Schneidkronenteil des Schneidwerkzeuges in einer gegenüber Fig. 1 um 90° gedrehten Seitenansicht,
- Fig. 4: den das Schneidkronenteil des Schneidwerkzeuges aufnehmenden Träger in gegenüber der Fig. 2 um die Rotationsachse gedreht dargestellter Lage und
- Fig. 5: das Schneidwerkzeug in einer Draufsicht auf die Schneideinsätze und das Schneidkronenteil.

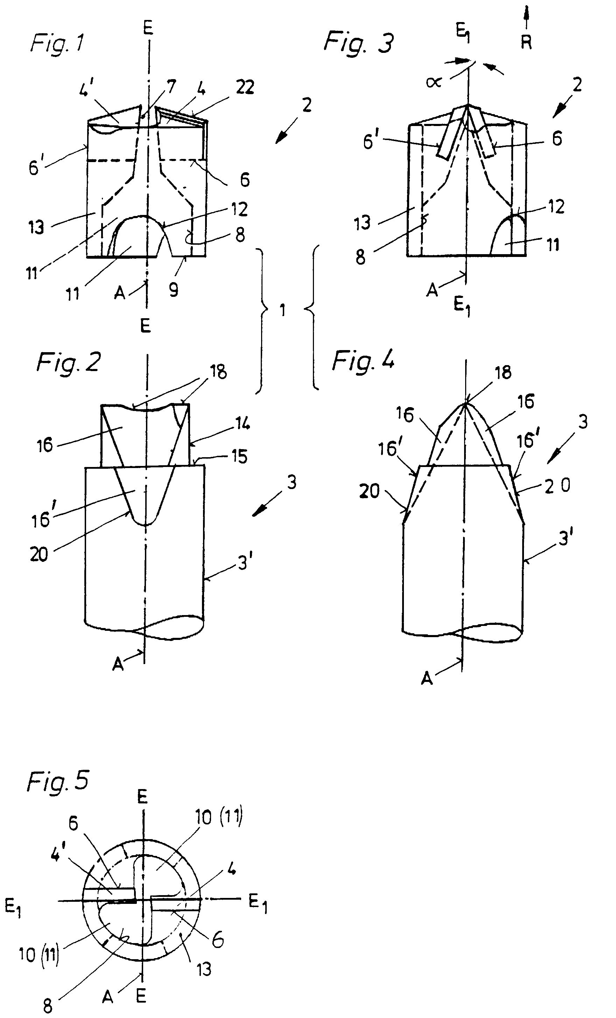

Die Fig. 1 und 2, sowie die Fig. 4 und 5 zeigen die zusammengehörigen Werkzeugteile in Explosionsdarstellung.

Bei dem in der Zeichnung dargestellten Ausführungsbeispiel ist das Schneidwerkzeug ingesamt mit **1** bezeichnet und enthält zwei zusammenwirkende Werkzeugteile **2** bzw. **3**. Das Werkzeugteil **2** bildet die Aufnahme für die Schneidplatten **4**,**4'** als Schneidkrone und das Teil **3** den Schneidkronenträger mit seinem Einspannschaft **3'**.
Das Schneidkronenteil **2** weist sich radial in Richtung der Drehachse **A** des Werkzeuges **1** erstreckende Nuten **6**, **6'** für die Aufnahme und Halterung der Schneidplatten **4**, **4'** auf. Die Nuten **6**, **6'** sind gegenüber einer die Rotationsachse **A** enthaltenden Längsmittelebene **E₁-E₁** des Werkzeuges **1** um einen Winkelbetrag α entgegen der Vorschubrichtung **R** geneigt angeordnet (Fig. 3). Die Schneidkrone **2** ist ferner mit einer zentralen, sich in Richtung der Drehachse **A** erstreckenden Ausnehmung **7** versehen, die sich zu beiden Seiten der Ebene **E₁-E₁** zu Spankammern **10** erweitert.
Die Kammern **10** gehen in Richtung der Rotationsachse **A** in Kanäle **11** über, die spiralförmig gewundenen Verlauf besitzen.
Das Schneidkronenteile **2** weist im Bereich ihres unteren Endes eine zylindrische Ausnehmung **8** auf, in welche der Schneidkronenträger **3** mit seinem zylindrischen Absatz **14** passend eingreift. Die axiale Kraftübertragung beim Schneidvorschub erfolgt über die Stirnflächen **9** bzw. **15** des Kronenteils **2** bzw. des Schneidkronenträgers **3**.
Für die drehfeste Verbindung zwischen dem Kronenteil **2** und dem Träger **3** sind hier nicht dargestellte Mitnahmenocken oder dergleichen vorgesehen.

Die spiralförmig verlaufenden Spankammern **10** bzw. die daran anschließenden Spanabführkanäle **11** weisen gegenüber der Rotationsachse **A** des Werkzeuges **1** einen radial nach außen gerichteten Verlauf auf und durchbrechen die Ringzylinderwandung **13** des Kronenteils **2**, so daß Übergangsöffnungen **12** entstehen. Diese Öffnungen **12** münden, in Fortsetzung der Kanäle **11** des Teils **2** in ebenfalls spiralförmige, nach außen gerichtet verlaufende Spanabführkanäle **16**, **16'** in der Umfangsfläche des Trägers **3**, wobei die Spanabführkanäle **16**, **16'** über Öffnungen **20** nach aussen ins Freie führen. Die Spanabführkanäle **16**, **16'** sind so in den zylindrisch verjüngten Absatz **14** und des Schaftes **3'** des Trägers **3** eingearbeitet, daß der Absatz **14** im Bereich seines oberen Endes in Form eines Keils bzw. einer Schneide **18** ausläuft, durch welche die Späne auf die Kammern **10** und die Kanäle **11**, sowie **16, 16'** verteilt werden.
Die Schneideinsätze **4**, **4'** sind aus Schneidwerkstoff bekannter Art gebildet und weisen sich radial erstreckende Hauptschneidkanten **22** auf. Die Hauptschneidkanten **22** der beiden Schneideinsätze **4**, **4'** der Schneidkrone **2** erstrecken sich zu beiden Seiten der Rotationsachse **A** radial in der gemeinsamen Längsmittelebene **E₁-E₁** mit in Umdrehungsrichtung um die Achse **A** gerichteter Schneidwirkung.
Es ist aber ohne weiteres möglich, mehr als zwei Schneideinsätze vorzusehen. Ferner können die Schneidkanten **22**, wie bekannt, bezogen auf die Längsmittelebene **E₁-E₁**in einer parallelen Vor- oder Nacheilstellung liegen. Die Schneidplatten **4**, **4'** sind, wie bekannt, je in einem gleichen Abstand von der Rotationsachse **A** angeordnet, so daß beim Schneidvorgang ein nicht zerspanter Kern bestehen bleibt, welcher über die Spankammern **10** und die Spanabführkanäle **11** des Kronenteils **2**, sowie über die daran anschließenden Spanabführkanäle **16**, **16'** des Trägers **3** nach außen abgeführt wird.

## Patentansprüche

1. Schneidwerkzeug zur Herstellung von zylindrischen Bohrungen mit
- zwei oder mehreren Schneideinsätzen, mit radial oder annähernd radial gerichteten, einen unzerspanten Kern belassenden Schneiden und
- in axialer Richtung des Werkzeuges verlaufenden Spanabführungen,
**dadurch gekennzeichnet**, daß
- sich das Schneidwerkzeug (**1**) aus mindestens zwei koaxialen Teilen (**2; 3**) zusammensetzt, wobei
- das eine Teil (**2**) die Bohrkrone mit den Schneideinsätzen (**4, 4'**) und das andere Teil (**3**) den Träger für die Bohrkrone (**2**) mit einem Spannschaft (**3'**) bildet und wobei
- sich die Spanabführungen (**7;10; 11; 16,16'**) axial über beide Teile (**2; 3**) erstrecken und radial nach außen führen.

2. Schneidwerkzeug nach Anspruch 1**, dadurch gekennzeichnet**, daß die Schneideinsätze (**4, 4'**) der Schneidkrone (**2**) mit ihren zur Rotationsachse (**A**) radialen Schneidkanten (**22**) um einen Winkelbetrag (α) gegenüber der die Rotationsachse (**A**) enthaltenden Längsmittelebene (**E₁-E₁**) geneigt angeordnet sind.

3. Schneidwerkzeug nach Anspruch 1 oder 2, **dadurch gekennzeichnet**, daß die Spankammern (**10**) und die Spanabführkanäle (**11**) der Schneidkrone (**2**) und bzw. oder die Spanabführkanäle (**16, 16'**) des Schneidkronenträgers (**3**) spiralförmigen und nach außen gerichteten Verlauf mit Anschluß an Auslaßöffnungen (**20**) aufweisen.

4. Schneidwerkzeug nach mindestens einem der vorangehenden Ansprüche, **dadurch gekennzeichnet**, daß der Schneidkronenträger (**3**) zumindest im Bereich seines oberen Endes, Keil- bzw. Schneidenform besitzt, wobei die Schneide (**18**) so ausgerichtet verläuft, daß deren Keilflächen (**16, 16'**) jeweils den Spankammern (**10**) bzw. den Kanälen (**11**) des Kronenteils (**2**) zugewandt sind.

5. Schneidwerkzeug nach mindestens einem der vorangehenden Ansprüche, **dadurch gekennzeichnet**, daß in die Keilflächen des Schneidkronenträgers (**3**) die Spanabführkanäle (**16, 16'**) eingearbeitet sind, die mit den Spanabführkanäle (**11, 11'**) des Schneidkronenträgers (**2**) zusammenwirken und einen geschlossenen Kanal bilden.

6. Schneidwerkzeug nach mindestens einem der vorangehenden Ansprüche, **dadurch gekennzeichnet**, daß der Schneidkronenträger (**3**) und die Schneidkrone (**2**) mittels einer koaxialen Steckverbindung, bestehend aus einer zylindrischen Ausnehmung (**8**) und einem zylindrischen Zapfen (**14**) zusammensteckbar ausgebildet sind und die Koppelung der Teile (**2; 3**) in Arbeitsrichtung um die Rotationsachse (A) mittels des keilförmigen Abschnittes des Trägers (**3**) und Anschlägen an der Schneidkrone (**2**) erfolgt.
